# EUROPÄISCHE PATENTANMELDUNG

(11) **EP 3 751 375 A1**
(43) Veröffentlichungstag der Anmeldung: **16.12.2020**
(21) Anmeldenummer: 20179069.8
(22) Anmeldetag: 09.06.2020
(51) Int. Cl.: G05B 23/02

(54) **VERFAHREN ZUR DIAGNOSE UND/ODER AUSWAHL VON FELDGERÄTEN DER AUTOMATISIERUNGSTECHNIK**

(30) Priorität: 13.06.2019 DE 102019116117
(71) Anmelder: Endress+Hauser Group Services AG, 4153 Reinach (CH)
(72) Erfinder: Page, Rebecca, 4054 Basel (CH); Segerlund, Stefan, 4102 Binningen (CH); Checiches, Dragos, 8404 Winterthur (CH); Helg, Dominik, 79650 Schopfheim (DE); Stocker, Beat, 4310 Rheinfelden (CH); Walker, Brian, Greenwood, IN 46142 (US); Herzog, Michael, 4467 Rothenfluh (CH); De Stasio, Enrico Mario, 1044 Fey (CH); Biondi, Manuel, 79674 Todtnau (DE); Fricke, Thomas, 87484 Nesselwang (DE)
(74) Vertreter: Andres, Angelika Maria

(57) **Zusammenfassung**

Verfahren zur Diagnose von Feldgeräten der Automatisierungstechnik, umfassend:
• Daten und Informationen zu jedem der Feldgeräte werden in zumindest einer cloud-basierten Datenbank gespeichert,
• Zusatzinformationen zu betroffenen Feldgeräten, die ausgetauscht wurden, oder an denen eine Reparatur oder eine Fehlerbehebung durchgeführt wird oder bei denen ein Mangel gerügt wurde, werden gespeichert, wobei eine aufgetretene technische Unregelmäßigkeit und/oder ein aufgetretener technischer Fehler eindeutig durch einen Fehlercode gekennzeichnet wird,
• Speichern der jeweils verwendeten Maßnahme zwecks Fehlerbehebung an einem betroffenen Feldgerät,
• Ein auf künstlicher Intelligenz basierendes, selbstlernendes System klassifiziert und/oder analysiert anhand der Fehlercodes, die gespeicherten Daten, Informationen und Zusatzinformationen, und ermittelt über ein multidimensionales Clusterverfahren und/oder Erkennung von Mustern die Ursache/Ursachen für an den Feldgeräten aufgetretene technische Unregelmäßigkeiten und/oder Fehlfunktionen,
• Die erkannte Ursache/die erkannten Ursachen für die aufgetretene Unregelmäßigkeit und/oder Fehlfunktion wird/werden zu den jeweils betroffenen Feldgeräten abspeichert,
• Es wird eine Warnmeldung generiert, wenn die technische Unregelmäßigkeit und/oder Fehlfunktion an mehreren Feldgeräten des desselben Feldgerätetyps auftreten.

## Beschreibung

Die Erfindung betrifft ein Verfahren zur Diagnose und/oder zur Auswahl von Feldgeräten der Automatisierungstechnik.

Aus dem Stand der Technik sind bereits Feldgeräte bekannt geworden, die in industriellen Anlagen der Automatisierungstechnik zum Einsatz kommen. In der Prozessautomatisierung ebenso wie in der Fertigungsautomatisierung werden vielfach Feldgeräte eingesetzt. Als Feldgeräte werden im Prinzip alle Feldgeräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Sensoreinheiten. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktorsysteme verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Feldgeräte verstanden, die auf der Feldebene angeordnet sind.

Eine Funktionsstörung oder der Ausfall eines Feldgeräts verursacht für einen Nutzer mitunter hohe Kosten. Insbesondere in kritischen Prozessen muss - bis das Feldgerät repariert oder ausgetauscht ist - ggf. der betreffende Teil der Automatisierungsanlage heruntergefahren werden. Üblicherweise wird das in seiner Funktion gestörte Feldgerät repariert oder durch ein gleiches Feldgerät ersetzt. Ist die aufgetretene Fehlfunktion durch einen Serienfehler, die Applikation und/oder die Prozess- oder Umgebungsbedingungen am Installationsort des Feldgeräts verursacht, so ist mit einem einfachen Austausch des Feldgeräts das Problem nicht dauerhaft lösbar. Mit relativ hoher Wahrscheinlichkeit wird auch das Ersatzgerät ausfallen, da z.B. bei Auftreten eines Serienfehlers die Gefahr der Wiederholung der Fehlfunktion nicht beseitigt ist.

Der Erfindung liegt die Aufgabe zugrunde, ein für eine definierte Applikation passendes Feldgerät zur Verfügung zu stellen.

Die Aufgabe wird gelöst durch ein Verfahren zur Diagnose von Feldgeräten der Automatisierungstechnik, die jeweils zumindest eine physikalische oder chemische Prozessgröße bestimmen und überwachen und die in teilweise voneinander verschiedenen Applikationen und/oder unter teilweise voneinander verschiedenen Prozess- oder Umgebungsbedingungen angeordnet sind, wobei das Verfahren die folgenden Schritte aufweist:
- Daten und Informationen zu jedem der Feldgeräte werden in zumindest einer cloud-basierten Datenbank gespeichert, wobei die Daten und Informationen aus unterschiedlichen Datenquellen stammen und wobei jedem der Feldgeräte die das entsprechende Feldgerät betreffenden Daten und Informationen eindeutig zugeordnet werden; beispielsweise kann es sich bei den Informationen auch um Expertenwissen, betreffend z.B. die Einbaureihenfolge von Analysegeräten, die Kenntnis über geeignete Orten für die Probennahme, usw. handeln. Allgemein lässt sich sagen, dass das Expertenwissen auch Information in Sprachform umfasst.
- Zusatzinformationen zu betroffenen Feldgeräten, die ausgetauscht wurden, oder an denen eine Reparatur oder eine Fehlerbehebung durchgeführt wurde oder bei denen ein Mangel gerügt wurde, werden gespeichert, wobei eine aufgetretene technische Unregelmäßigkeit und/oder ein aufgetretener technischer Fehler eindeutig durch einen Fehlercode gekennzeichnet wird,
- Speichern der jeweils durchgeführten Maßnahme zwecks Fehlerbehebung an einem betroffenen Feldgerät,
- Ein auf künstlicher Intelligenz basierendes, selbstlernendes System klassifiziert und/oder analysiert anhand der Fehlercodes, die definierte technische Unregelmäßigkeiten und/oder Fehlfunktionen kennzeichnen, die gespeicherten Daten, Informationen und Zusatzinformationen, und ermittelt über ein multidimensionales Clusterverfahren und/oder Erkennung von Mustern die Ursache/Ursachen für an den Feldgeräten aufgetretene technische Unregelmäßigkeiten und/oder Fehlfunktionen,
- Die erkannte Ursache/die erkannten Ursachen für die aufgetretene Unregelmäßigkeit und/oder Fehlfunktion wird/werden zu den jeweils betroffenen Feldgeräten abspeichert,
- Es wird eine Warnmeldung generiert, wenn die technische Unregelmäßigkeit und/oder Fehlfunktion an mehreren Feldgeräten des desselben Feldgerätetyps auftreten, und/oder die Feldgeräte dieselbe physikalische oder chemische Prozessgröße in zumindest näherungsweise gleichen Applikationen und/oder unter gleichen Prozess- oder Umgebungsbedingungen bestimmen oder überwachen.

Eine vorteilhafte Weiterbildung des erfindungsgemäßen Verfahrens umfasst den folgenden Verfahrensschritt:
Anhand der gespeicherten Zusatzinformationen, die sich auf Reparaturen und/oder Fehlerbehebungen an den Feldgeräten beziehen, werden Serienfehler der Feldgeräte mittels statistischer Auswerteverfahren der in der cloud-basierten Datenbank gespeicherten Daten, Informationen und Zusatzinformationen ermittelt. Die Serienfehler können beispielsweise, aber nicht ausschließlich, produktions- oder prozessbedingt sein.

Weiterhin wird in Verbindung mit dem erfindungsgemäßen Verfahren Folgendes vorgeschlagen:
Festlegen von Produktionsintervallen bei den Feldgeräten der unterschiedlichen Feldgerätetypen,
Ermitteln der in den Produktionsintervallen gefertigten und eindeutig gekennzeichneten Feldgeräte der unterschiedlichen Feldgerätetypen,
Korrelieren der in den Produktionsintervallen gefertigten Feldgeräte der unterschiedlichen Feldgerätetypen mit der Anzahl der Reparaturen und Fehlerbehebungen an den Feldgeräten der unterschiedlichen Feldgerätetypen,
Berechnen von jeweils einem Fehlerindex für jedes der Produktionsintervalle zur Fertigung der unterschiedlichen Feldgerätetypen, wobei der Fehlerindex jeweils das Verhältnis der Anzahl von Reparaturen und Fehlerbehebungen an den Feldgeräten in den Produktionsintervallen zu der Anzahl der in den entsprechenden Produktionsintervallen gefertigten Feldgeräte des entsprechenden Feldgerätetyps darstellt.

Weiterhin ist vorgesehen, dass eine Warnmeldung generiert wird, dass ein produktionsbedingter Serienfehler wahrscheinlich ist, wenn der aufgetretene Fehler auf eine vergleichbare Ursache zurückzuführen ist und wenn die Anzahl der Feldgeräte, bei denen ein Serviceeinsatz zwecks Reparatur und/oder Fehlerbehebung erforderlich war, oberhalb eines tolerierbaren statistischen Mittelwerts liegt, oder wenn der zeitliche Verlauf der mittleren Anzahl von Serviceeinsätzen zwecks Reparatur und/oder Fehlerbehebung in aufeinanderfolgenden Produktionsintervallen außerhalb einer tolerierbaren statistischen Verteilungskurve liegt, wobei die Verteilungskurve bevorzugt eine Weibull-Kurve ist.

Eine Ausgestaltung des erfindungsgemäßen Verfahrens umfasst den folgenden Verfahrensschritt:
Speichern der verwendeten Lösungen zur Behebung des aufgetretenen Serien- oder Produktionsfehlers zu den entsprechenden Feldgeräten und Speichern der Information, ob eine verwendete Lösung bzw. welche Lösung verwendete Lösung dauerhaft den aufgetretenen Fehler behoben hat.

Darüber hinaus wird vorgeschlagen, dass die verifizierten Serien- oder Produktionsfehler aus den Daten, die dem selbstlernenden Expertensystem zur Verfügung gestellt werden, entfernt werden.

Als vorteilhaft wird es angesehen, wenn das erfindungsgemäße Verfahren folgende Verfahrensschritte aufweist:
Ausgeben einer Liste von allen installierten oder gelagerten Feldgeräten eines Feldgerätetyps, die innerhalb von zumindest einem Produktionsintervall einen produktionsbedingten Serienfehler zeigen;
Ausgeben von Information über den Ursprung eines aufgetretenen Serienfehlers; Ausgeben von zumindest einem Lösungsvorschlag, wie der aufgetretene Serienfehler mit hoher Wahrscheinlichkeit zu beheben ist.
Somit wird dem Kunden / dem Servicetechniker eine brauchbare und verlässliche Lösung für sein Problem aufgezeigt.

Darüber hinaus werden die folgenden Verfahrensschritte vorgeschlagen:
Ausgeben einer Liste mit Lösungsvorschlägen, wie der aufgetretene Serienfehler mit hoher Wahrscheinlichkeit zu beheben ist, wobei der erfolgversprechendste Lösungsvorschlag an erster Stelle genannt ist, und wobei der erfolgversprechendste Lösungsvorschlag derjenige ist, der in der größten Anzahl der bislang aufgetretenen Anwendungsfällen dauerhaft zum Erfolg geführt hat.

Weiterhin hat es sich als vorteilhaft erwiesen, wenn die folgenden Verfahrensschritte in Verbindung mit der Erfindung durchgeführt werden:
Erkennen von vergleichbaren Fehlfunktionen, die an Feldgeräten eines Feldgerätetyps oder mehrerer Feldgerätetypen in Abhängigkeit von den Prozess- und/oder Umgebungsbedingungen am Installationsort aufgetreten sind,
Speichern der jeweils angewendeten Lösung zur Reparatur oder Fehlerbehebung.

Bevorzugt wird das Verfahren dadurch ergänzt, dass eine Rückmeldung eines Nutzers /Servicetechnikers an das Expertensystem erfolgt, ob eine vorgeschlagene Lösung den gewünschten Erfolg gezeigt hat oder nicht. Zudem wird vorgeschlagen, dass eine Rückmeldung an das Expertensystem erfolgt, falls von dem Nutzer / Servicetechniker eine abweichende Lösung erfolgreich angewendet wurde. Somit wird dem Expertensystem wichtige Service-Information bereitgestellt. Diese ist u.U. für den Innovationsprozess bezüglich der Neugestaltung oder Weiterentwicklung von entsprechenden Feldgeräten verwendbar. Im Prinzip lässt sich damit ein permanent laufender Feldtest erzeugen: An den Feldgeräten aufgetretene Fehlfunktionen und deren erfolgreiche Behebung können so unmittelbar in den Innovationsprozess einfließen. Weiterhin kommen bevorzugt die folgenden Verfahrensschritte in Verbindung mit dem erfindungsgemäßen Verfahren zum Einsatz:
Ausgabe einer Warnmeldung, dass ein Feldgerät des gewünschten Feldgerätetyps unter den angegebenen Prozess- und/oder Umgebungsbedingungen nicht dauerhaft einsetzfähig ist, sobald die Fehler- oder Ausfallrate bei Feldgeräten und/oder Feldgerätetypen, die unter vergleichbaren Prozess- und/oder Umgebungsbedingungen installiert sind, einen tolerierbaren Grenzwert überschreitet.

Als günstig wird es darüber hinaus angesehen, wenn die beiden folgenden Verfahrensschritte eingesetzt werden:
Erkennen von regionalen Bereichen, in denen vermehrt Ausfälle von Feldgeräten oder Fehlfunktionen an Feldgeräten infolge eines für die Applikation /die Applikationen unpassenden Feldgerätetyps / unpassender Feldgerätetypen auftreten, und
Schulen der Verkäufer derart, dass die entsprechenden Missstände beseitigt werden.

Eine vorteilhafte Ausgestaltung des erfindungsgemäßen Verfahrens schlägt Folgendes vor:
Bestellen eines Feldgeräts eines definierten Feldgerätetyps unter Angabe der Applikation und/oder der Prozess- und/oder Umgebungsbedingungen, die am Installationsort des Feldgeräts herrschen,
Bereitstellen von zumindest einem Lösungsvorschlag durch das auf Künstlicher Intelligenz basierende, selbstlernende System, wie ein unter den angegebenen Prozess- und/oder Umgebungsbedingungen installiertes Feldgerät ausgestattet sein sollte, damit es seine Bestimmungs- oder Überwachungsfunktion mit hoher Wahrscheinlichkeit über eine vorgegebene Standzeit erfüllen kann. Erhält der Anbieter hier die Rückmeldung, dass der Kunde entgegen dem Angebot auf ein alternatives Feldgerät zurückgegriffen hat, so können aus dieser Diskrepanz zwischen angebotenem und verkauftem Feldgerät in der jeweiligen Applikation wertvolle Hinweise für das Expertensystem und nachfolgend u. U. für den Entwicklungsprozess beim Hersteller geliefert werden.

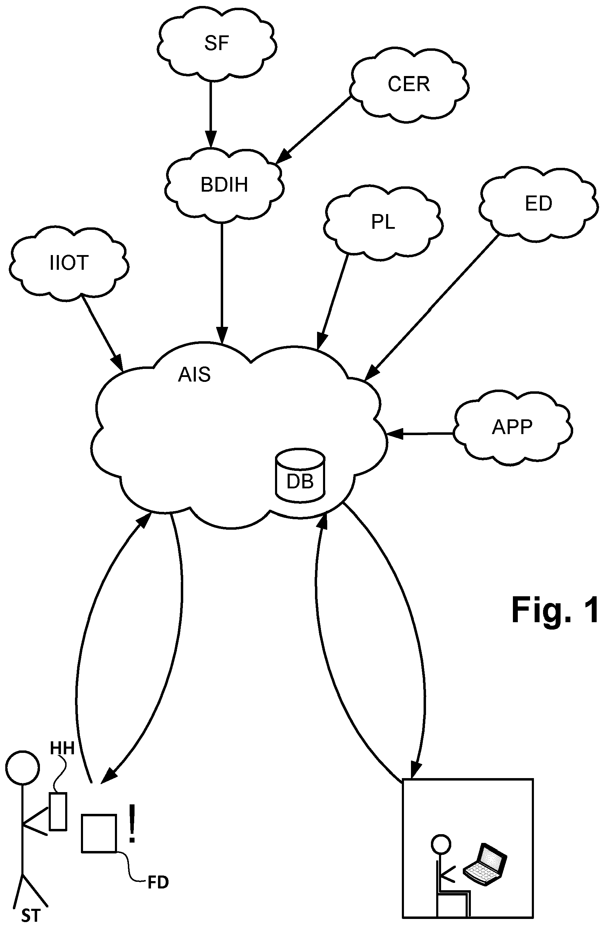

Die Erfindung wird anhand der nachfolgenden Figuren näher erläutert. Fig. 1 zeigt eine schematische Darstellung eines Systems, das zur Durchführung des erfindungsgemäßen Verfahrens zur Diagnose und/oder Auswahl von Feldgeräten FD der Automatisierungstechnik geeignet ist. Aufbauend auf der Diagnose werden einem Anwender / Nutzer N /Servicetechniker ST gezielt Vorschläge unterbreitet, die die Auswahl eines für die jeweilige Applikation passenden Feldgeräts FD zielführend unterstützen. Hierzu wird ein selbstlernendes System AIS eingesetzt, dessen Vorhersagen durch zeitnahe Rückmeldungen des zuvor genannten Personenkreises stetig verbessert werden. Mit der erfindungsgemäßen Lösung lässt sich die Erfolgsrate, dass auf Anhieb ein für die Applikation optimal geeignetes Feldgerät FD verwendet wird, erheblich erhöhen. Zeit und Kosten werden eingespart; die Ausfallrate der Feldgeräte FD wird reduziert, und die Standzeit der Feldgeräte FD wird verlängert.

Gezeigt ist in der Fig. 1 lediglich ein Feldgerät FD. Es versteht sich jedoch, dass die installierte Basis von Feldgeräten FD einige Hunderte, Tausende oder auch Millionen an Feldgeräten FD unterschiedlicher Typen in unterschiedlichen Applikationen umfassen kann.

Jedes der Feldgeräte FD bestimmt oder überwacht zumindest eine physikalische oder chemische Prozessgröße in der Automatisierungstechnik. Jedes der Feldgeräte FD ist in einer definierten Applikation angeordnet und erfüllt dort eine definierte Aufgabe. Unter dem Begriff "Feldgerätetyp" werden in Verbindung mit der Erfindung Sensor oder Aktoren verstanden, bei denen die technische Funktion auf demselben Mess- oder Stellprinzip beruht und bei denen daher eine entsprechend große Anzahl von mechanischen oder elektrischen/ elektronischen Komponenten identisch ist. Feldgerätetyp ist beispielsweise eine Einrohr-Coriolis-Durchflussmessgerät oder ein Puls-Radar-Füllstandsmessgerät, das Mikrowellen einer definierten Frequenz zur Messung des Füllstands verwendet.

Feldgeräte FD sind nicht nur bezüglich Ihrer Mess- und Stellaufgaben unterschiedlich; sie werden auch in unterschiedlichen Applikationen eingesetzt. Beispielsweise kann ein pH-Sensor eines definierten Feldgerätetyps den pH-Wert in einem Fluss, in einer Trinkwasserreservoir oder in einem Abwasseraufbereitungsbecken bestimmen/überwachen. Folglich sind auch die Prozess- und/oder Umgebungsbedingungen am Installationsort des Feldgeräts FD sehr unterschiedlich. Ist das Feldgerät FD beispielsweise in einem Behälter, in einem Tank oder einer Rohrleitung, angeordnet, so ist es den im Behälter herrschenden Prozessbedingungen ausgesetzt. Befindet sich das Feldgerät hingegen in einer Außeninstallation, das heißt außerhalb eines Gebäudes, so ist es den am Installationsort herrschenden Umgebungsbedingungen ausgesetzt.

Aufgrund der unterschiedlichen Prozess- und/oder Umgebungsbedingungen sind auch die Anforderungen, die an die Messperformance und die Beständigkeit und Stabilität eines Feldgeräts FD gestellt werden, höchst unterschiedlich. Bei der Auswahl eines für eine Messaufgabe in einer definierten Applikation geeigneten Feldgeräts FD kommt es daher üblicherweise in hohem Maße auf die Erfahrung und das Fachwissen der Person an, die die Auswahl des Feldgeräts FD trifft. Dieses Fachwissen bezieht sich sowohl auf die Feldgeräte FD als solche und auf die Prozesse, in denen sie eingesetzt werden sollen.

Ein wesentliches Ziel des erfindungsgemäßen Verfahrens ist es, die Qualitäts-Feedback-Schleife vom Feld zu F&E- und produktionsbezogenen Funktionen zu schließen, ohne sich auf eine detaillierte Kodierung von Fehlercodes durch die an der Behebung von Problemen im Feld beteiligten Parteien, wie z.B. das Servicepersonal, verlassen zu müssen. Jede derartige Kodierung während der anfänglichen Entdeckung eines Problems im Feld ist anfällig dafür, eine falsche Schlussfolgerung in Bezug auf die Grundursache zu ziehen. Bis heute ist nur der erfahrene Serviceexperte in der Lage, alle Fakten und Daten zu betrachten, um mit hoher Wahrscheinlichkeit eine tragfähige Grundursache zu entdecken.

Zentrale Komponente des Systems zur Durchführung des erfindungsgemäßen Verfahrens ist ein selbstlernendes Expertensystem AIS. Dieses Expertensystem AIS nutzt die Methoden der Künstliche Intelligenz, um die Daten und Informationen, die bezüglich der vorhandenen oder installierten Feldgerätebasis verfügbar sind, zu analysieren, anhand der gesammelten Daten und Informationen Diagnosen durchzuführen, und auf der Basis der Analyse und Diagnose einem Nutzer N / ST / A ein für die jeweilige Anwendung optimal passendes Feldgerät FD oder eine für die Anwendung optimal passende Maßnahme zur Fehlerbehebung an einem der Feldgeräte FD vorzuschlagen.

Das Expertensystem AIS umfasst drei Schritte:
1) Die Wissensbasis wird mittels Datenfusion und Mining aufgebaut.
2) Das Expertensystem ist darauf trainiert, verschiedene Arten von Unterstützungs- und Wartungsaktivitäten zu unterscheiden. Das System wird mit menschlichem Experten-Feedback aus dem wirklichen Leben gefüttert, um eine Mustererkennung für Probleme wie die folgenden zu erreichen:
   - Reparatur:
      (a) Austausch oder Ersetzen von Komponenten, gekennzeichnet durch die Verwendung eines Teils im Serviceauftrag, oder
      (b) aufgrund von Prozessproblemen wie mechanischem/physikalischem/chemischem/ elektrischem/etc. Einfluss, außerhalb der Betriebsspezifikationen des Geräts, oder
      (c) eine Reparatur wurde vom Kunden angefordert, aber bei der Analyse durch den Experten wurde kein Fehler gefunden.
   - Inbetriebnahme: Es sind keine Teile zur Ausführung der Arbeit, zur Programmierung von Instrumentenparametern oder zur Änderung des physikalischen Setups erforderlich.
   - Die Kalibrierung des Geräts kann entweder
      (a) ein routinemäßiges Konformitätsproblem oder eine Methode zur Überprüfung der Genauigkeit des Geräts sein, oder
      (b) eine Methode zur Bewertung der Grundursache einer vom Anwenderprozess gemeldeten Abweichung
   - Modifikation: Der Service an der Ausrüstung war erforderlich, um ein Problem zu beheben, das während des Projekts zur Einrichtung des Systems entstanden war, wie z.B. ein falsches/fehlendes Typenschild, eine inaktive Funktion innerhalb der Firmware.
   - Instandhaltung:
      (a) eine rein präventive Aufgabe oder ein Compliance-getriebenes Gerät wird überprüft, ohne dass ein Alarm oder ähnliches vorliegt, oder
      (b) mit der Erkennung einer Fehlfunktion, die repariert werden muss
   - Probleme, die durch die mangelnde Datenqualität entstehen, wie z.B. menschliches Versagen bei der Dateneingabe, falsch angewandter Prozess, fehlende Details, falsch angewandte Stammdaten. Diese Alarme werden beispielsweise verwendet, um Prozessverbesserungen auszulösen.
   Die obige Kategorisierung wird innerhalb des Dienstleistungsprozesses definiert, liefert aber oft keinen klaren Hinweis auf die Ursache oder die Art der Probleme. Daher wird das System mit menschlichem Experten-Feedback aus dem wirklichen Leben gefüttert, um einen Mustervergleich für Probleme wie die folgenden zu erreichen, damit das System nach oder gegen die häufigsten Störungsvorfälle ohne Serienfehlerhintergrund filtern kann:
   - Häufige, aber übliche praktische Fragen im Zusammenhang mit dem physikalischen oder chemischen Messprinzip und dem Zustand des Prozesses: Wie z.B. instabile Durchflussmessung aufgrund von Kavitationseffekten in Verbindung mit fehlendem Prozessdruck oder instabile Füllstandmessung aufgrund von Schaumbildung oder Anhaftungen.
   - Beeinträchtigung der Messqualität durch Einflüsse von Prozessparametern wie z.B. zu hohe Temperatur oder Vibrationen.
   - Installationsprobleme, die ungenaue Ergebnisse verursachen.
   - Fälle oder wiederholte Beratungen, die signalisieren, dass die Aktivität beim ersten Versuch nicht abgeschlossen werden konnte.
   - Verbrauch und Anwendung eines Ersatzteils oder eines Wartungsartikels.
   - Fälle von "Kein Fehler gefunden": Es gibt verschiedene plausible Erklärungen und Muster, wenn der gemeldete Fehler bei der Untersuchung nicht beobachtet werden kann.
   Um ganzheitlich zu lernen, berücksichtigt das System systematisch angewandte (Stamm-)Daten aus den feldbezogenen Prozessen und Feldgeräten, die den Informationsfluss aus der Kundenanwendung liefern, sowie unsystematische Daten, menschliche Überlegungen und Meinungen, um potenzielle Probleme zu ermitteln und einen spezifischen Alarm für einen der typischen Serienfehler zu erzeugen, der zu einer Entscheidung, die betroffenen Feldgeräte zurückzurufen, führen kann:
   - Probleme mit Komponenten von Feldgeräten, beispielsweise "out-of-specification" oder welche unter bestimmten Umständen auftreten, z.B. bei erhöhter Umgebungstemperatur, Vibrationen, Korrosion, etc.;
   - Montageprobleme, z.B. unsachgemäße Montage von Komponenten, die zu mechanischen/elektrischen/chemischen Problemen und potenziellen Risiken für die Bediener führen können;
   - Probleme mit der Firmware der Feldgeräte;
   - Problemen bezüglich der Benutzerschnittstelle der Feldgeräte, inbegriffen beispielsweise Fragestellungen hinsichtlich der Eignung für ungeschultes Personal;
   - Systemprobleme, sprich die Kombination von Software und Datenaustauschprotokollen als mögliche Störungsursache;
   - Empfindlichkeit für den Betrieb eines Geräts nahe den im Datenblatt angegebenen Höchstgrenzen ;
   - Fehler in der Produktdokumentation vor oder nach dem Verkauf;
   - Verwendung von Teilen oder Dienstleistungen von Drittanbietern.
   Manchmal liegt die wiederholte Beobachtung eines Themas zwischen den oben genannten eindeutigen Definitionen. Daher muss ein gelegentliches Gespräch mit dem Servicetechniker vorgesehen werden, um
   infolgedessen auch diese "Grauzone" herausfiltern zu können. Dies dient dem Zweck die Nutzbarkeit und Robustheit künftiger Produktgenerationen oder die Überarbeitung aktueller Produktlinien zu stärken.
   Eine dedizierter Bereich des Expertensystems speichert hierbei verifizierte Grundursachen aus der Expertenanalyse in der Wissensdatenbank zusammen mit der Art von Daten, die sich als entscheidend für die Identifizierung der Grundursache erwiesen haben. Dies ermöglicht es dem System, nach fehlenden Informationen zu fragen, bevor es ein Muster identifiziert und einen Alarm auslöst.
3) Kommunikation der identifizierten Empfehlungen und Probleme. Warnmeldungen werden an die Produktion und Produktentwicklung des Feldgeräteherstellers bereitsgestellt, die einen Prioritätscode zur weiteren Analyse zur Ermittlung der Ursache übermitteln.

Jedem Schritt wird eine Reihe von agentenbasierten Modellen ("Agents") zugeordnet, die einzeln und als Gesamtsystem optimiert werden.

Die Agents des ersten Schrittes sind dezentralisierte Mining-Agents, sie leiten die Informationen aus verschiedenen Quellen ab. Der Grund für den dezentralisierten Ansatz ist die Verteilung der Informationsquellen (meist in mehrsprachigem Textformat erwähnt, z.B. CRM (Anwendungsempfehlungen oder Beschwerden zum Beispiel), Service-Berichte, loT-Plattform, etc.

Die Mining-Agents umfassen Methoden wie
a) Verarbeitung natürlicher Sprache für linguistisches Kunden- und Service-Feedback;
b) Stimmungsanalyse für Social-Media-Kanäle;
c) Ausreißer- und Trenderkennung für die Online-Zeitreihenanalyse,
d) produktionsintervallbasierte Ausreißer- und Trenderkennung;
e) direktes Feedback aus neuen Empfehlungen (z.B. neues Produkt oder Lösung eines Service- oder Wartungsproblems).

Diese nicht erschöpfende Liste enthält Ansätze des maschinellen Lernens, ist aber nicht auf diese beschränkt. Die abgeleiteten Informationen werden dann von jeder Informationsquelle (Verlagsagenten) veröffentlicht. Die zentralisierte Einheit wird in einem Cloud-basierten Ökosystem gehostet. Das Ökosystem umfasst mindestens eine skalierbare Datenspeicherlösung, skalierbare Rechenleistung, Kommunikationsports und kann auf einem containerisierten Ansatz zur Bereitstellung von Berechnungen und zentralisierten Learning-Agents basieren. Die Learning-Agents abonnieren die Kanäle zur Veröffentlichung von Informationen und werden ausgelöst, wenn neue Informationen veröffentlicht werden.

Dieser Schritt ermöglicht ein adaptives Lernen, da die Wissensbasis mit der Zeit wächst und sich entwickelt, sowie das Feedback aus den abgegebenen Empfehlungen über die Informationsquellen gesammelt wird. Die Learning-Agents basieren auf Methoden wie Reinforcement Learning (RL) in Form von Markov-Entscheidungsprozessen oder Singulärwertzerlegung (SVD), um Muster zwischen historischen und neuen Informationen zu identifizieren und abzugleichen. Zu den berücksichtigten Kategorien gehören geographische und klimatische Merkmale, industrielle Prozesse, Industrie oder Produktionsintervalle.

Teil dieses zentralisierten Schritts ist ein Empfehlungsagent, der entscheidet, ob die neu ausgelöste Empfehlung oder das identifizierte Service-/Wartungsproblem gültig ist und weitere Aufmerksamkeit verdient, z.B. durch Verwendung eines Mindestschwellenwertes für den neuen Informationsgehalt. Diese Informationen werden dann veröffentlicht. Der dritte Schritt ist wiederum dezentralisiert, wobei die Agents die veröffentlichten Empfehlungen abonnieren und die Informationen an die Endbenutzer weiterleiten, z.B. Qualität, Service, Vertriebs- und Marketingkanäle, Forschung und Entwicklung, Produktionsteams oder Kundensupport wie den Complaint Managent.

Die Informationen werden dem Endbenutzer in seinem bevorzugten Kanal, z.B. einer der oben genannten Informationsquellen, übermittelt. Jede identifizierte Empfehlung oder jedes identifizierte Problem ist mit einer eindeutigen Expertensystem-Kennung verbunden, und Rückmeldungen zur Gültigkeit und Hilfsbereitschaft können an Stufe 1 des Expertensystems AIS ausgegeben werden und helfen den Learning-Agents, in Zukunft bessere Empfehlungen oder Mustererkennungen abzugeben.

Eine Neuheit des Expertensystems AIS besteht auch darin, dass es durch Vergleich mit seiner Datenbank potenziell fehlende Informationen erkennen kann, einschließlich positiv verifizierter Ursachen in der Wissensdatenbank.

Eine weitere Neuheit des Expertensystems AIS besteht darin, dass es wiederkehrende Probleme bei der fehlerhaften Anwendung der Instrumentierungsausrüstung erkennt und spezifische Schulungen für Kunden und Verkaufsvermittler oder eine automatisierte Produktauswahlsoftware empfiehlt, um sicherzustellen, dass das Produkt erst dann verkauft wird, wenn potenzielle Probleme ausgeschlossen sind.

Das erfindungsgemäße Verfahren umfasst die folgenden Schritte:
- Daten und Informationen zu jedem der Feldgeräte FD werden in zumindest einer cloud-basierten Datenbank DB gespeichert, wobei die Daten und Informationen aus unterschiedlichen Datenquellen stammen und wobei jedem der Feldgeräte FD die das entsprechende Feldgerät FD betreffenden Daten und Informationen eindeutig zugeordnet werden. Bevorzugt erfolgt die Zuordnung über eine Seriennummer des Feldgeräteherstellers. Dann ist es möglich, bereits die Bestell- und Produktionsdaten eindeutig dem Feldgerät FD zuzuordnen.

Bei dem in Fig. 1 gezeigten Beispiel stammen die Daten und Informationen aus unterschiedlichen Datenquellen. Die Daten und Informationen umfassen zumindest einen der nachfolgend genannten Teilbereiche, wobei die Auflistung nicht abschließend zu sehen ist:
- Bestelldaten
- Kundenbezogene Geschäftsdaten,
- Kundenbezogene Installationsdaten,
- Produktionsdaten der Feldgeräte,
- Service-, Reparatur- und Supportdaten von Technikern (händisch eingegeben),
- Parametrier- und/oder Kalibrierdaten,
- Technische Informationen über das Feldgerät FD und Ersatzteile für das Feldgerät FD sowie dessen Verfügbarkeit,
- technische Applikationsdaten, die von einem Kunden oder einem Servicetechniker/Verkäufer über einen Feldgeräte-Konfigurator eingegeben wurden,
- Ilot Daten und Informationen zu den einzelnen Feldgeräten, die über Software Tools und Apps zur Verfügung gestellt werden.

Eine Datenquelle ist eine IlotT Cloud. Eine Datenquelle des Expertensystems AIS, das zumindest eine Methode der Künstlichen Intelligenz nutzt, ist die die Plattform BDIH. Diese stellt Geschäftsdaten des Anbieters/Produzenten der Feldgeräte FD zur Verfügung, ebenso wie technische Informationen zu den Feldgeräten FD. Die Plattform BDIH, die Daten und Information in Echtzeit zur Verfügung stellt, wird im gezeigten Fall mit Kunden- und Nutzerdaten aus Salesforce.com SF gespeist. Salesforce.com SF bietet eine webbasierte Lösung "Sales Cloud" für das Kundenbeziehungsmanagement. Nutzer können über ihren PC oder ein mobiles Endgerät HH, wie z. B. ein Smartphone, ein Tablet, Kundendaten und Kundenaufträge abrufen und bearbeiten. Die Plattform BDIH dient u.a. zur Speicherung von Kundendaten und Kundenaufträgen. Die Zuordnung einer Bestellnummer zu einer Seriennummer eines Feldgeräts erfolgt hierbei händisch. Erfasst sind auch alle lieferbaren Feldgeräte FD ebenso wie die Information darüber, ob die Feldgeräte FD noch lieferbar sind und wie lange sie voraussichtlich noch lieferbar sind.

Salesforce Chatter verfügt darüber hinaus über ähnliche Funktionen wie Facebook: Mitarbeiter können Nutzerprofile anlegen, Nutzergruppen beitreten und Personen, Projekte oder Dokumente, an denen sie arbeiten, mitverfolgen. Weiterhin ist vorgesehen, dass Servicetechniker ST über Salesforce.com SF ergriffene Maßnahmen zur Reparatur oder zur Fehlerbehebung den entsprechenden Feldgeräten FD zuordnen. Über Salesforce.com SF werden die gespeicherten Daten einem autorisierten Nutzer ST, N in Echtzeit zur Verfügung gestellt. Es versteht sich von selbst, dass Salesforce.com nur beispielhaft genannt ist. Selbstverständlich können auch entsprechende Softwaretools anderer Anbieter in Verbindung mit der Erfindung zum Einsatz kommen.

Weiterhin werden der Plattform BDIH Daten einer Datenbank CER zur Verfügung gestellt. In der Datenbank CER sind Daten und Informationen zu Ersatzteilen für die einzelnen Feldgeräte FD zu finden sind. Aufgelistet sind in dieser Datenbank CER alle lieferbaren Ersatzteile, ebenso wie Information darüber, wie lange die einzelnen Ersatzteile noch lieferbar sind. Ein Verfahren zum automatischen Erstellen von Ersatzteillisten zu einem Feldgerät FD ist übrigens in der DE 103 22 080 A1 beschrieben.

Dem Expertensystem AIS werden darüber hinaus Daten von einem Software-Tool Applicator APP zur Verfügung gestellt. Das Software-Tool ermöglicht die Auswahl eines für eine definierte Applikation geeigneten Feldgeräts FD, ohne dass der Besteller fundierte Fachkenntnisse über das Feldgerät FD oder den Prozess hat, in dem das Feldgerät FD integriert ist. Ausgestaltungen eines Software-Tools Applicatior APP sind beispielsweise in der DE 102006 060 441 A1 und der DE 10 2012 112 601 A1 beschrieben.

Weiterhin greift das Expertensystem AIS auf Daten und Informationen aus einer Plattform PL zu, die Produktionsdaten und Produktionsinformationen zu den einzelnen Feldgeräten FD enthält. Diese Plattform PL wird nachfolgend mit Product Lens bezeichnet. Die in dieser Datenbank PL gespeicherten Daten und Informationen dienen insbesondere dazu, die Produktionsprozesse des Herstellers der Feldgeräte FD zu überprüfen und Serienfehler von Feldgeräten FD schnell und zuverlässig zu detektieren. In der parallel am selben Anmeldetag eingereichten Patentanmeldung der Anmelderin "Verfahren zum Überprüfen des Produktionsprozesses von Feldgeräten der Automatisierungstechnik" ist detailliert beschrieben, wie das Verfahren arbeitet. Insbesondere werden folgende Verfahrensschritte durchgeführt:
- Erfassen von Daten von Feldgeräten FD, umfassend Identifikationsdaten, den jeweiligen Typ eines Feldgeräts, Konfigurationsdaten, und Daten betreffend das Produktionsdatum und den Produktionsort eines jeden Feldgeräts FD;
- Korreliertes Speichern der Daten auf einer Serviceplattform;
- Im Falle, dass für eines der Feldgeräte FD ein Reparatur- und/oder Fehlerbehebungsfall auftritt, Speichern des Reparatur- und/oder Fehlerbehebungsfalles auf der Serviceplattform verknüpft mit den Daten des jeweiligen Feldgeräts FD; und
- Ermitteln von Serienfehlern der Feldgeräte FD anhand einer statistischen Auswertung aller auf der Serviceplattform gespeicherten Reparatur- und/oder Fehlerbehebungsfälle.

Mit dem Verfahren kann präzise abgeschätzt werden, ob ein bestimmter Serienfehler in der installierten Basis existiert und welche Feldgeräte FD von diesem Serienfehler betroffen sind. Ort und Zeit der Entstehung des Serienfehlers lassen sich auffinden. Hierdurch besteht die Möglichkeit, proaktiv auf einen detektierten Serienfehler zu reagieren, beispielsweise mittels eines Rückrufs der entsprechenden Feldgeräte FD oder mittels Serviceeinsätzen zur Korrektur des Serienfehlers an allen betroffenen Feldgeräten FD.

Fehlermeldungen an Feldgeräten FD werden jedoch nicht nur durch Produktionsfehler oder fehlerhafte Feldgerätebauteile hervorgerufen. Ein Serviceeinsatz eines Servicetechnikers ST kann auch dadurch erforderlich werden, wenn das Feldgerät FD für die am Installationsort herrschenden Prozess- und/oder Umgebungsbedingungen ED ungeeignet ist. Hier ist also das Expertenwissen des Servicetechnikers ST gefragt, der über detaillierte Kenntnisse der Prozess- und/oder Umgebungsbedingungen am Installationsort des Feldgeräts FD verfügen muss. Neben ausreichender Temperatur-, Druck- und/oder Korrosionsbeständigkeit kann auch der Fall auftreten, dass die Isolierung von Kabeln von im Freien installierten Feldgeräten FD, z.B. in Australien, von Kakadus beschädigt wird. Die entsprechende Info wird über dem entsprechenden Feldgerät von einem Servicetechniker zugeordnet. Die benötigte Information wird dem Expertensystem AIS üblicherweise von einem Servicetechniker ST über entsprechende Servicetools oder einem Nutzer N, z.B. einem Verkäufer, bevorzugt über Salesforce.com SF zur Verfügung gestellt. Ist somit z.B. bekannt, dass ein Feldgerät FD in Australien im Freien installiert wird/ist, so muss das Feldgerät FD eine zerstörungssichere Isolierung der Kabel aufweisen.

Darüber hinaus werden Zusatzinformationen über definierte Feldgeräte FD, an denen eine Reparatur oder eine Fehlerbehebung durchgeführt wird, gespeichert, wobei eine aufgetretene technische Unregelmäßigkeit und/oder ein aufgetretener technischer Fehler gekennzeichnet wird. Weiterhin werden die jeweils ergriffenen Maßnahmen zur Reparatur oder Fehlerbehebung an den betroffenen Feldgeräten FD in einer Datenbank DB, die dem Expertensystem AIS zugeordnet ist, gespeichert. Die Information des Servicetechnikers ST wird dem Expertensystem z.B. über Salesforce.com SF zugeleitet. Durch das stetige Updaten der unterschiedlichen Plattformen, auf die das Expertensystem AIS Zugriff hat, und durch das stete Feedback an das auf Künstlicher Intelligenz basierende System AIS verbessert dieses stetig seine zur Verfügung gestellten Lösungen oder getroffene Aussagen ständig.

Das Expertensystem AIS nutzt Methoden der Künstlicher Intelligenz, um die Daten, Informationen und Zusatzinformationen anhand der von den Feldgeräten FD gelieferten Fehlercodes, die definierte technische Unregelmäßigkeiten und/oder Fehlfunktionen kennzeichnen, zu klassifizieren und/oder zu analysieren. Über ein multidimensionales Clusterverfahren werden so die Ursache/Ursachen für an den Feldgeräten FD aufgetretene technische Unregelmäßigkeiten und/oder Fehlfunktionen erkannt. Diese erkannte Ursache/diese erkannten Ursachen wird/werden zu den jeweils betroffenen Feldgeräten FD abspeichert und/oder dem Servicetechniker ST mitgeteilt. Es wird eine Warnmeldung generiert, wenn die technische Unregelmäßigkeit und/oder Fehlfunktion an mehreren Feldgeräten FD des desselben Feldgerätetyps auftreten, und/oder die Feldgeräte dieselbe physikalische oder chemische Prozessgröße in zumindest näherungsweise gleichen Applikationen und/oder unter gleichen Prozess- oder Umgebungsbedingungen bestimmen oder überwachen.

Das Expertensystem AIS erkennt und ermittelt vergleichbare Fehlfunktionen, die an Feldgeräten FD eines Feldgerätetyps oder mehrerer Feldgerätetypen in Abhängigkeit von den Prozess- und/oder Umgebungsbedingungen am Installationsort aufgetreten sind. Die Diagnose erfolgt auf der Basis einer Mustererkennung. Die erfolgreich angewendete Lösung zur Reparatur oder Fehlerbehebung wird in der Datenbank des Expertensystems AIS verfügbar gehalten und/oder dem Servicetechniker ST mitgeteilt. Bevorzugt wird eine Warnmeldung ausgegeben, dass ein Feldgerät FD des gewünschten Feldgerätetyps unter den angegebenen Prozess- und/oder Umgebungsbedingungen nicht dauerhaft einsetzfähig ist, sobald die Fehler- oder Ausfallrate bei vergleichbar installierten Feldgeräten FD und/oder Feldgerätetypen einen tolerierbaren Grenzwert überschreitet.

In Fig. 1 ist ein weiterer Anwendungsfall des erfindungsgemäßen Verfahrens beschrieben. Ein Nutzer N möchte ein Feldgerät FD eines definierten Feldgerätetyps bestellen. Die Prozess- und/oder Umgebungsbedingungen, die am Installationsort des Feldgeräts FD herrschen, sind bekannt und werden gleichfalls an das Expertensystem AIS geschickt. Das Expertensystem AIS stellt zumindest einen Lösungsvorschlag bereit, wie ein unter den angegebenen Prozess- und/oder Umgebungsbedingungen installiertes Feldgerät FD ausgestattet sein sollte, damit es seine Bestimmungs- oder Überwachungsfunktion mit hoher Wahrscheinlichkeit über eine vorgegebene Standzeit erfüllen kann. Gegebenenfalls erhält der Nutzer N weitere Vorschläge für bestellbare Feldgeräte FD, die gleichfalls unter den angegebenen Bedingungen die benötigte Funktion erfüllen. Der Nutzer N kann die von ihm gewünschte Bestellung über einen der üblichen Bestellkanäle ordern.

## Patentansprüche

1. Verfahren zur Diagnose von Feldgeräten (FD) der Automatisierungstechnik, die jeweils zumindest eine physikalische oder chemische Prozessgröße bestimmen und überwachen und die in teilweise voneinander verschiedenen Applikationen und/oder unter teilweise voneinander verschiedenen Prozess- oder Umgebungsbedingungen angeordnet sind, wobei das Verfahren die folgenden Schritte aufweist:
• Daten und Informationen zu jedem der Feldgeräte (FD) werden in zumindest einer cloud-basierten Datenbank (DB) gespeichert, wobei die Daten und Informationen aus unterschiedlichen Datenquellen stammen und wobei jedem der Feldgeräte (FD) die das entsprechende Feldgerät betreffenden Daten und Informationen eindeutig zugeordnet werden,
• Zusatzinformationen zu betroffenen Feldgeräten (FD), die ausgetauscht wurden, oder an denen eine Reparatur oder eine Fehlerbehebung durchgeführt wurde oder bei denen ein Mangel gerügt wurde, werden gespeichert, wobei eine aufgetretene technische Unregelmäßigkeit und/oder ein aufgetretener technischer Fehler eindeutig durch einen Fehlercode gekennzeichnet wird,
• Speichern der jeweils durchgeführten Maßnahme zwecks Fehlerbehebung an einem betroffenen Feldgerät (FD),
• Ein auf künstlicher Intelligenz basierendes, selbstlernendes System (AIS) klassifiziert und/oder analysiert anhand der Fehlercodes, die definierte technische Unregelmäßigkeiten und/oder Fehlfunktionen kennzeichnen, die gespeicherten Daten, Informationen und Zusatzinformationen, und ermittelt über ein multidimensionales Clusterverfahren und/oder Erkennung von Mustern die Ursache/Ursachen für an den Feldgeräten (FD) aufgetretene technische Unregelmäßigkeiten und/oder Fehlfunktionen,
• Die erkannte Ursache/die erkannten Ursachen für die aufgetretene Unregelmäßigkeit und/oder Fehlfunktion wird/werden zu den jeweils betroffenen Feldgeräten (FD) abspeichert,
• Es wird eine Warnmeldung generiert, wenn die technische Unregelmäßigkeit und/oder Fehlfunktion an mehreren Feldgeräten (FD) des desselben Feldgerätetyps auftreten, und/oder die Feldgeräte (FD) dieselbe physikalische oder chemische Prozessgröße in zumindest näherungsweise gleichen Applikationen und/oder unter gleichen Prozess- oder Umgebungsbedingungen bestimmen oder überwachen.

2. Verfahren nach Anspruch 1 mit folgenden Verfahrensschritten,
wobei anhand der gespeicherten Zusatzinformationen, die sich auf Reparaturen und/oder Fehlerbehebungen an den Feldgeräten (FD) beziehen, Serienfehler der Feldgeräte (FD) mittels statistischer Auswerteverfahren der in der cloud-basierten Datenbank (DB) gespeicherten Daten, Informationen und Zusatzinformationen ermittelt werden.

3. Verfahren nach Anspruch 1 oder 2, wobei folgende Verfahrensschritte vorgesehen sind:
Festlegen von Produktionsintervallen bei den Feldgeräten (FD) der unterschiedlichen Feldgerätetypen,
Ermitteln der in den Produktionsintervallen gefertigten und eindeutig gekennzeichneten Feldgeräte (FD) der unterschiedlichen Feldgerätetypen,
Korrelieren der in den Produktionsintervallen gefertigten Feldgeräte (FD) der unterschiedlichen Feldgerätetypen mit der Anzahl der Reparaturen und
Fehlerbehebungen an den Feldgeräten (FD) der unterschiedlichen Feldgerätetypen,
Berechnen von jeweils einem Fehlerindex für jedes der Produktionsintervalle zur Fertigung der unterschiedlichen Feldgerätetypen, wobei der Fehlerindex jeweils das Verhältnis der Anzahl von Reparaturen und Fehlerbehebungen an den Feldgeräten in den Produktionsintervallen zu der Anzahl der in den entsprechenden Produktionsintervallen gefertigten Feldgeräte (FD) des entsprechenden Feldgerätetyps darstellt.

4. Verfahren nach Anspruch 3, mit folgendem Verfahrensschritt:
wobei eine Warnmeldung generiert wird, dass ein Serienfehler wahrscheinlich ist, wenn der aufgetretene Fehler auf eine vergleichbare Ursache zurückzuführen ist und wenn die Anzahl der Feldgeräte (FD), bei denen ein Serviceeinsatz zwecks Reparatur und/oder Fehlerbehebung erforderlich war, oberhalb eines tolerierbaren statistischen Mittelwerts liegt, oder wenn der zeitliche Verlauf der mittleren Anzahl von Serviceeinsätzen zwecks Reparatur und/oder Fehlerbehebung in aufeinanderfolgenden Produktionsintervallen außerhalb einer tolerierbaren statistischen Verteilungskurve liegt, wobei die Verteilungskurve bevorzugt eine Weibull-Kurve ist.

5. Verfahren nach einem oder mehreren der vorhergehenden Ansprüche, mit folgendem Verfahrensschritt:
Speichern der verwendeten Lösungen zur Behebung des aufgetretenen Serien- oder Produktionsfehlers zu den entsprechenden Feldgeräten (FD) und Speichern der Information, ob eine verwendete Lösung bzw. welche Lösung verwendete Lösung dauerhaft den aufgetretenen Fehler behoben hat.

6. Verfahren nach einem oder mehreren der vorhergehenden Ansprüche mit folgendem Verfahrensschritt:
Entfernen der verifizierten Serien- oder Produktionsfehler aus den Daten, die dem selbstlernenden Expertensystem (AIS) zur Verfügung gestellt werden.

7. Verfahren nach einem oder mehreren der vorhergehenden Ansprüche mit folgenden Verfahrensschritten:
Ausgeben einer Liste von allen installierten oder gelagerten Feldgeräten (FD) eines Feldgerätetyps, die innerhalb von zumindest einem Produktionsintervall einen Serienfehler zeigen;
Ausgeben von Information über den Ursprung eines aufgetretenen Serienfehlers;
Ausgeben von zumindest einem Lösungsvorschlag, wie der aufgetretene Serienfehler mit hoher Wahrscheinlichkeit zu beheben ist.

8. Verfahren nach einem der vorhergehenden Ansprüche mit den folgenden Verfahrensschritten:
Ausgeben einer Liste mit Lösungsvorschlägen, wie der aufgetretene Serienfehler mit hoher Wahrscheinlichkeit zu beheben ist, wobei der erfolgversprechendste Lösungsvorschlag an erster Stelle genannt ist, und wobei der erfolgversprechendste Lösungsvorschlag derjenige ist, der in der größten Anzahl der bislang aufgetretenen Anwendungsfällen dauerhaft zum Erfolg geführt hat.

9. Verfahren nach einem oder mehreren der vorhergehenden Ansprüche mit den folgenden Verfahrensschritten:
Erkennen von vergleichbaren Fehlfunktionen, die an Feldgeräten (FD) eines Feldgerätetyps oder mehrerer Feldgerätetypen in Abhängigkeit von den Prozess- und/oder Umgebungsbedingungen am Installationsort aufgetreten sind,
Speichern der jeweils angewendeten Lösung zur Reparatur oder Fehlerbehebung.

10. Verfahren nach einem der mehreren der vorhergehenden Ansprüche mit folgendem Verfahrensschritt:
Rückmeldung eines Nutzers /Servicetechnikers (N) an das Expertensystem (AIS), ob eine vorgeschlagene Lösung den gewünschten Erfolg gezeigt hat oder nicht,
Rückmeldung an das Expertensystem (AIS), falls von dem Nutzer / Servicetechniker (N) eine abweichende Lösung erfolgreich angewendet wurde.

11. Verfahren nach Anspruch 9 oder 10 mit folgenden Verfahrensschritten:
Ausgabe einer Warnmeldung, dass ein Feldgerät des gewünschten Feldgerätetyps unter den angegebenen Prozess- und/oder Umgebungsbedingungen nicht dauerhaft einsetzfähig ist, sobald die Fehler- oder Ausfallrate bei Feldgeräten und/oder Feldgerätetypen, die unter vergleichbaren Prozess- und/oder Umgebungsbedingungen installiert sind, einen tolerierbaren Grenzwert überschreitet.

12. Verfahren nach einem oder mehreren Ansprüchen mit folgenden Verfahrensschritten:
Erkennen von regionalen Bereichen, in denen vermehrt Ausfälle von Feldgeräten oder Fehlfunktionen an Feldgeräten infolge eines für die Applikation /die Applikationen unpassenden Feldgerätetyps / unpassender Feldgerätetypen auftreten, und
Schulen der Verkäufer derart, dass die entsprechenden Missstände beseitigt werden.

13. Verfahren nach einem oder mehreren der vorhergehenden Ansprüche mit folgendem Verfahrensschritt:
Bestellen eines Feldgeräts eines definierten Feldgerätetyps unter Angabe der Applikation und/oder der Prozess- und/oder Umgebungsbedingungen, die am Installationsort des Feldgeräts herrschen,
Bereitstellen von zumindest einem Lösungsvorschlag durch das auf Künstlicher Intelligenz basierende, selbstlernende System (AIS), wie ein unter den angegebenen Prozess- und/oder Umgebungsbedingungen installiertes Feldgerät (FD) ausgestattet sein sollte, damit es seine Bestimmungs- oder Überwachungsfunktion mit hoher Wahrscheinlichkeit über eine vorgegebene Standzeit erfüllen kann.
